# EUROPEAN PATENT SPECIFICATION

(11) **EP 1 207 182 B1**
(45) Date of publication and mention of the grant of the patent: **07.04.2004**
(21) Application number: 01114272.6
(22) Date of filing: 12.06.2001
(51) Int. Cl.: C08K 5/5399, C08L 69/00, C08K 5/00, C07F 9/00

(54) **Flame retardant thermoplastic resin composition**
Flammhemmende thermoplastische Harzzusammensetzung
Composition ignifuge de résine thermoplastique

(30) Priority: 02.11.2000 KR 2000064931
(43) Date of publication of application: 22.05.2002
(73) Proprietor: Cheil Industries Inc., Kumi-shi, Kyungbuk (KR)
(72) Inventor: Seo, Kyung-Hoon, Euiwang-shi, Kyungki-do, 437-010 (KR); Lim, Jong-Cheol, Euiwang-shi, Kyungki-do, 437-010 (KR); Yang, Sam-Joo, Euiwang-shi, Kyungki-do, 437-010 (KR)
(74) Representative: Hering, Hartmut, Dipl.-Ing.

(56) References cited:
- EP-A- 0 728 811
- EP-A- 1 069 154
- EP-A- 4 692 488
- WO-A-91/02738
- CA-A- 1 121 535
- US-A- 2 418 224
- US-A- 4 062 909

## Description

The present invention relates to a flame retardant thermoplastic resin composition. More particularly, the present invention relates to a flame retardant thermoplastic resin composition that comprises a polycarbonate resin, a rubber modified graft copolymer, a styrene-containing copolymer, an oligomeric phosphoric acid ester morpholide compound as a flame retardant and a fluorinated polyolefin resin. The present invention relates to a polycarbonate thermoplastic resin composition with good flame retardancy, heat stability, heat resistance and high flexural modulus and with improved resistance for juicing phenomenon.

Polycarbonate resin is excellent in transparency, mechanical strength and heat resistance, therefore, the resin is widely applied to electric or electronic goods, automobile parts, office supplies, etc. However, the polycarbonate resin has poor processability and notch-sensitive impact strength. In order to overcome the shortcomings, the polycarbonate resin is blended with other polymer resin(s). For example, a blend of a polycarbonate resin and an acrylonitrile-butadiene-styrene copolymer (ABS) is a good resin composition that improves processability maintaining the good notched impact strength.

The polycarbonate/ABS resin composition should further have good flame retardancy as well as high mechanical strength because the resin is applied to the fields of electric or electronic goods, office supplies, etc. To provide this thermoplastic resin composition with good flame retardancy, a halogen-containing flame retardant and/or an antimony-containing compound were used. U.S Patent Nos. 4,983,658 and 4,883,835 disclose resin compositions employing halogen-containing compounds as flame retardants. However, the disadvantages could be observed that the halogen-containing compound results in the corrosion of the mold itself by the hydrogen halide gases released during the molding process and is fatally harmful due to the toxic gases liberated in case of fire. Especially, since a polybromodiphenyl ether, mainly used for a halogen-containing flame retardant, can produce toxic gases such as dioxin or furan during combustion, flame retardants that are prepared without a halogen-containing compound have become a major concern in this field.

A general method is employ phosphoric acid ester compounds as flame retardants to provide the thermoplastic resin compositions with flame retardancy without using a halogen-containing compound. U.S. Patent No. 4,248,976 discloses a flame retardant resin composition which comprises an aromatic polymer such as a styrenic polymer, an aromatic polyester, a polycarbonate, or a polyphenylene oxide, and a mixture of (a) a phosphorus compound and (b) a compound of R(CH₂X)n where R is an aromatic group or heterocyclic group, X is a leaving group and n is 2 or above as flame retardant agent. However, the resin composition can cause a dripping phenomenon during combustion.

U.S. Patent No. 4,692,488 discloses a thermoplastic resin composition comprising a halogen free aromatic polycarbonate resin, a halogen free SAN (styrene-acrylonitrile) copolymer, halogen free phosphorus compounds as flame retardants, a tetrafluoroethylene polymer and a small amount of ABS (acrylonitrile-butadiene-styrene) copolymer. If a halogen free phosphorus compound and a tetrafluoroethylene polymer are used together as in this U.S. patent, the dripping phenomenon can be prevented, but a juicing phenomenon occurs due to the migration of the flame retardant agent to the surface of a molded article during molding process.

U.S. Patent No. 5,030,675 discloses a flame retardant resin composition comprising an aromatic polycarbonate resin, an ABS copolymer resin, a polyalkyleneterephthalate resin, a monophosphorus compound, and a fluorinated polyolefin. Although the resin composition improves stress crack resistance somewhat, impact strength becomes poor and heat stability is deteriorated when processed at elevated temperature.

It is known that an oligomeric phosphorus ester is used as a flame retardant. Japanese Patent Publication No. 59-202,240 discloses a method of preparing an oligomeric phosphorus ester and the use of the oligomeric phosphorus ester in a polyamide or polycarbonate resin composition. However, the resin composition using the oligomeric phosphorus ester is inferior to the resin composition using the monophosphorus ester in flame retardancy and a juicing phenomenon also occurs due to migration of the monophosphate, contained in the oligomeric phosphorus ester, to the surface of a molded article during molding. The oligomeric phosphorus ester contains up to 40 % by weight of monophosphate.

U.S. Patent No. 5,061,745 discloses a thermoplastic resin composition comprising an aromatic polycarbonate resin, an ABS graft copolymer, a copolymer, and a monophosphorus ester. As the flame retardant agent is monomeric, the juicing phenomenon is not prevented and the heat stability is rapidly deteriorated when processed at high temperature.

U.S. Patent No. 5,672,645 discloses a PC/ABS resin composition comprising an aromatic polycarbonate resin, a vinyl copolymer, a graft copolymer, a mixture of a monophosphorus ester and an oligomeric phosphorus ester, and a fluorinated polyolefin. In this case, as the resin composition contains the mixture including about 10 ∼ 90 % by weight of the monophosphorus ester, the juicing phenomenon is not prevented. And, as the flame retardability of an oligomeric phosphorus ester is less than that of a momophosphorus ester in usual, the more oligomeric phosphorus ester is contained in the flame retardant agent, the poorer flame retardancy of resin composition is.

U.S. Patent No. 5,204,394 discloses a resin composition comprising an aromatic polycarbonate resin, a styrene-containing copolymer or a graft copolymer, and oligomeric phosphorus esters as flame retardants. Although the resin composition improves the juicing phenomenon resistance, but is inferior to the resin composition using the monophosphorus esters as flame retardants in flame retardancy. Accordingly, to maintain a good flame retardancy, the resin composition should contain more flame retardants than in the resin composition containing monophosphorus ester as flame retardants. As a result, the resin composition shows poor impact strength and heat resistance due to the high content of a flame retardant.

As disclosed in the patents above, if the flame retardant agent is monomeric phosphorus ester, the juicing phenomenon is not prevented and the heat stability is rapidly deteriorated when processed at high temperature. On the other hand, if the flame retardant agent is an oligomeric phosphorus ester, the resin composition improves the juicing phenomenon, but is inferior to the resin composition using the monophosphorus ester in flame retardancy. In the latter case, accordingly, to maintain a good flame retardancy, the flame retardant agent should contain more oligomeric phosphorus ester than monophosphorus ester, and the resin composition shall show poor impact strength and heat resistance.

The present inventors have developed a flame retardant thermoplastic resin composition that comprises a polycarbonate resin, a rubber modified graft copolymer, a styrene-containing copolymer, a phosphoric acid ester morpholide compound as a flame retardant and a fluorinated polyolefin resin, which is superior to the resin composition using oligomeric phosphorus esters as flame retardants in flame retardancy, heat resistance and flexural modulus and superior to the resin composition using monophosphorus esters as flame retardants in juicing resistance, heat stability, heat resistance, flexural modulus and appearance.

One object of the present invention is the provision of a flame retardant thermoplastic resin composition with good flame retardancy, heat resistance and high flexural modulus.

Another object of the present invention is the provision of a flame retardant thermoplastic resin composition that is superior to the resin composition using oligomeric phosphorus esters as flame retardants in flame retardancy, heat resistance and flexural modulus.

A further object of the present invention is the provision of a flame retardant thermoplastic resin composition which is superior to the resin composition using monophosphorus esters as flame retardants in juicing resistance, heat stability, heat resistance, flexural modulus and appearance.

Other objects and advantages of this invention will be apparent from the ensuing disclosure.

A flame retardant thermoplastic resin composition according to the present invention comprises (A) 45 to 95 parts by weight of a polycarbonate resin, (B) 1 to 50 parts by weight of a rubber modified graft copolymer prepared by graft-polymerizing (b₁) 5 to 95 parts by weight of a monomer mixture consisting of (b₁₁) 50 to 95 % by weight of styrene, α-methylstyrene, halogen- or methyl ring-substituted styrene, C₁₋₈ methacrylic acid alkyl ester, C₁₋₈ acrylic acid alkyl ester, or a mixture thereof and (b₁₂) 5 to 50 % by weight of acrylonitrile, methacrylonitrile, C₁₋₈ methacrylic acid alkyl ester, C₁₋₈ acrylic acid alkyl ester, maleic acid anhydride, C₁₋₄ alkyl- or phenyl N-substituted maleimide or a mixture thereof onto (b₂) 5 to 95 parts by weight of a rubber polymer with a glass transition temperature of below -10°C selected from the group consisting of butadiene rubber, acrylate rubber, ethylene-propylene rubber, styrene-butadiene rubber, acrylonitrile-butadiene rubber, isoprene rubber, copolymer of ethylene-propylene-diene (EPDM), polyorganosiloxane-polyalkyl(metha)acrylate rubber or a mixture thereof, (C) about 0.5 to 50 parts by weight of a styrene-containing copolymer polymerized with (c₁) 50 to 95 % by weight of styrene, α-methylstyrene, ring-substituted styrene or a mixture thereof and (c₂) 5 to 50 % by weight of acrylonitrile, methacrylonitrile, C₁₋₈ methacrylic acid alkyl ester, C₁₋₈ acrylic acid alkyl ester, maleic acid anhydride, C₁₋₄ alkyl- or phenyl N-substituted maleimide or a mixture thereof, (D) 0.5 to 30 parts by weight of an oligomeric phosphoric acid ester morpholide compound which is represented by the following chemical formula (I), or a mixture thereof as a flame retardant as per 100 parts by weight of (A)+(B)+(C), and (E) 0.05 to 5.0 parts by weight of a fluorinated polyolefin resin with average particle size of 0.05 to 1000 µm and density of 1.2 to 2.3 g/cm³ as per 100 parts by weight of (A)+(B)+(C): 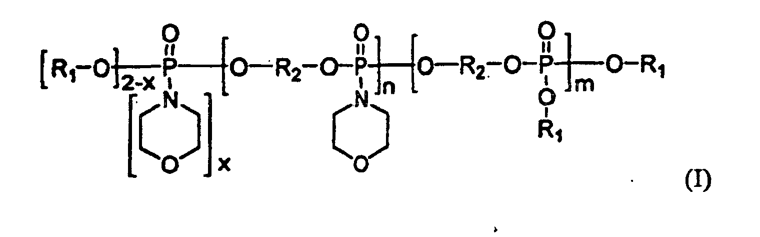 where R₁ is a C₆₋₂₀ aryl group or an alkyl-substituted C₆₋₂₀ aryl group, R₂ is a C₆₋₃₀ aryl group or an alkyl-substituted C₆₋₃₀ aryl group, x is 1 or 2, and n and m are number average degree of polymerization and n+m is 0.3 to 3.

A flame retardant thermoplastic resin composition according to the present invention comprises (A) 45 to 95 parts by weight of a polycarbonate resin, (B) 1 to 50 parts by weight of a rubber modified graft copolymer, (C) 0.5 to 50 parts by weight of a styrene-containing copolymer, (D) 0.5 to 30 parts by weight of an oligomeric phosphoric acid ester morpholide compound as a flame retardant, and (E) 0.05 to 5.0 parts by weight of a fluorinated polyolefin resin as per 100 parts by weight of (A)+(B)+(C). Each component will be described in detail as follow:

### (A) Polycarbonate Resin

The polycarbonate resin is prepared by reacting a diphenol represented by the following formula (II) with a phosgene, a halogen formiate or a carboxylic acid diester: 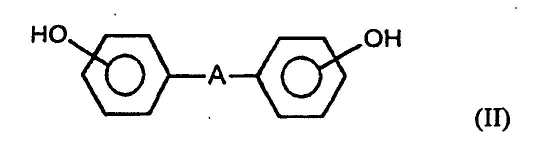 where A is a single bond, C₁₋₅ alkylene group, C₂₋₅ alkylidene group, C₅₋₆ cycloalkylidene group, -S- or -SO₂-.

Suitable diphenols of the formula (II) are, for example, hydroquinone, resorcinol, 4,4'-dihydroxydiphenyl, 2,2-bis-(4-hydroxyphenyl)-propane, 2,4-bis-(4-hydroxyphenyl)-2-methylbutane, 1,1-bis-(4-hydroxyphenyl)-cyclohexane, 2,2-bis-(3-chloro-4-hydroxyphenyl)-propane, and 2,2-bis-(3,5-dichloro-4-hydroxyphenyl)-propane. Preferred diphenols of the formula (II) are 2,2-bis-(4-hydroxyphenyl)-propane, 2,2-bis-(3,5-dichloro-4-hydroxyphenyl)-propane, and 1,1-bis-(4-hydroxyphenyl)-cyclohexane, and the most preferable diphenol is 2,2-bis-(4-hydroxyphenyl)-propane called 'bisphenol A'.

In the present invention it is preferable that the polycarbonate resin (A) has a weight average molecular weight (M_{w}) of about 10,000 to 200,000, more preferably about 15,000 to 80,000. Suitable polycarbonate according to the invention may be branched in a known manner, in particular preferably by incorporation 0.05 to 2 mol% related to total quantity of diphenols used, of tri- or higher functional compounds, for example those with three or more phenolic groups.

A homopolymer of polycarbonate, a copolymer of polycarbonate or a mixture thereof may be used in this invention. Some portion of the polycarbonate resin may be replaced with an ester precursor such as an aromatic polyester-carbonate resin that is obtained by polymerization in the presence of difunctional carboxylic acid.

The polycarbonate resin is used in an amount of about 45 to 95 parts by weight as per 100 parts by weight of (A)+(B)+(C) according to the present invention.

### (B) Rubber Modified Graft Copolymer

The rubber modified graft copolymer according to the present invention is prepared by graft-polymerizing (b₁) about 5 to 95 parts by weight of a monomer mixture consisting of (b₁₁) about 50 to 95 % by weight of styrene, α-methylstyrene, halogen- or methyl ring-substituted styrene, C₁₋₈ methacrylic acid alkyl ester, C₁₋₈ acrylic acid alkyl ester, or a mixture thereof and (b₁₂) about 5 to 50 % by weight of acrylonitrile, methacrylonitrile, C₁₋₈ methacrylic acid alkyl ester, C₁₋₈ acrylic acid alkyl ester, maleic acid anhydride, C₁₋₄ alkyl- or phenyl N-substituted maleimide or a mixture thereof onto (b₂) about 5 to 95 parts by weight of a rubber polymer with a glass transition temperature of below -10°C selected from the group consisting of butadiene rubber, acrylate rubber, ethylene-propylene rubber, styrene-butadiene rubber, acrylonitrile-butadiene rubber, isoprene rubber, copolymer of ethylene-propylene-diene (EPDM), polyorganosiloxane-polyalkyl(metha)acrylate rubber or a mixture thereof. :

The C₁₋₈ methacrylic acid alkyl ester is obtained from methacrylic acid and monohydric alcohol with 1 to 8 carbon atoms and C₁₋₈ acrylic acid alkyl ester from acrylic acid and monohydric alcohol with 1 to 8 carbon atoms. The examples of the acid alkyl ester include methacrylic acid methyl ester, methacrylic acid ethyl ester, acrylic acid methyl ester, acrylic acid ethyl ester, and methacrylic acid propyl ester. Methacrylic acid methyl ester is the most preferable.

Preferable examples of the rubber modified graft copolymer are styrene-containing graft polymers that a mixture of styrene and acrylonitrile is grafted onto butadiene rubber, acrylate rubber or styrene-butadiene rubber. The most preferable example of the rubber modified graft copolymer is a styrene-containing graft polymer that a mixture of styrene and acrylonitrile is grafted onto butadiene rubber, which is called acrylonitrile-butadiene-styrene copolymer (ABS).

The rubber modified graft copolymer is used in an amount of about 1 to 50 parts by weight as per 100 parts by weight of (A)+(B)+(C) according to the present invention. The rubber polymer to prepare the rubber modified graft copolymer has preferably an average particle size of about 0.05 to 4.0 µm considering the impact strength and appearance.

The rubber modified graft copolymer according to the present invention can be prepared by a conventional polymerization process such as emulsion, suspension, solution or bulk process. However, the copolymer can be preferably prepared by the emulsion or bulk process in which vinyl monomers are added to the rubber polymer using an initiator.

### (C) Styrene-Containing Copolymer

The styrene-containing copolymer is a vinyl copolymer that is polymerized with (c₁) about 50 to 95 % by weight of styrene, α-methylstyrene, ring-substituted styrene, or a mixture thereof and (c₂) about 5 to 50 % by weight of acrylonitrile, methacrylonitrile, C₁₋₈ methacrylic acid alkyl ester, C₁₋₈ acrylic acid alkyl ester, maleic acid anhydride, C₁₋₄ alkyl- or phenyl N-substituted maleimide or a mixture thereof. A mixture of the copolymers may be used as the component (C).

The C₁₋₈ methacrylic acid alkyl ester is obtained from methacrylic acid and monohydric alcohol with 1 to 8 carbon atoms and C₁₋₈ acrylic acid alkyl ester from acrylic acid and monohydric alcohol with 1 to 8 carbon atoms. The examples of the acid alkyl ester include methacrylic acid methyl ester, methacrylic acid ethyl ester, acrylic acid methyl ester, acrylic acid ethyl ester, and methacrylic acid propyl ester. Methacrylic acid methyl ester is the most preferable.

The styrene-containing copolymer can be produced as by-products when preparing the rubber modified graft copolymer (B). The by-products are mostly produced when an excess of monomers are grafted onto a small amount of rubber polymer or when a chain transferring agent is used in excess. The amount of the styrene-containing copolymer to be used in this invention does not include the amount of the by-products that might be produced during preparation of the rubber modified graft copolymer (B). The styrene-containing copolymer is a thermoplastic resin that does not contain a rubber polymer component.

The preferable examples of the styrene-containing copolymer are a copolymer of styrene and acrylonitrile, a copolymer of α-methylstyrene and acrylonitrile, and a copolymer of styrene, α-methylstyrene and acrylonitrile. The styrene-containing copolymer is preferably prepared by emulsion, suspension, solution or bulk process, and has a weight average molecular weight (M_{w}) of about 15,000 to 200,000.

Another preferable example of the styrene-containing copolymer is a copolymer of styrene and maleic acid anhydride, which is prepared by a continuous bulk process or a solution process. The maleic acid anhydride is preferably used in the amount of about 5 to 25 % by weight. The copolymer of styrene and maleic acid anhydride has a weight average molecular weight (M_{w}) of about 60,000 to 200,000 and an intrinsic viscosity of about 0.3 to 0.9.

The styrene for preparation of the component (C) in this invention can be replaced by p-methylstyrene, vinyltoluene, 2,4-dimethylstyrene or α-methylstyrene. The styrene-containing copolymers are used in an amount of about 0.5 to 50 parts by weight as per 100 parts by weight of (A)+(B)+(C) according to the present invention.

### (D) Oligomeric Phosphoric Acid Ester Morpholide Compound as Flame Retardant

The oligomeric phosphoric acid ester morpholide compound as a flame retardant in this invention is represented by the following formula (I), which is used in single or in combination as a mixture: 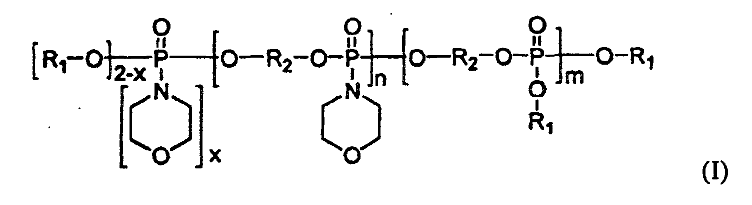 where R₁ is a C₆₋₂₀ aryl group or an alkyl-substituted C₆₋₂₀ aryl group, R₂ is a C₆₋₃₀ aryl group or an alkyl-substituted C₆₋₃₀ aryl group, x is 1 or 2, and n and m are number average degree of polymerization and n+m is 0.3 to 3.

Preferably R₁ is a phenyl group or an alkyl-substituted phenyl group in which alkyl is methyl, ethyl, isopropyl, t-butyl, isobutyl, isoamyl or t-amyl, preferably methyl, ethyl, isopropyl or t-butyl.

R₂ in the formula (I) means a C₆₋₃₀ aryl group or an alkyl-substituted C₆₋₃₀ aryl group. It is preferable that the C₆₋₃₀ aryl group or alkyl-substituted C₆₋₃₀ aryl group is derived from diphenols such as resorcinol, hydroquinone and bisphenol-A.

The methods of preparation of the oligomeric phosphoric acid ester morpholide compound are not limited, but the compound is generally prepared by reacting a diphenol compound such as resorcinol, hydroquinone and bisphenol-A with arylmorpholino-chlorophosphate in the presence of a catalyst by a conventional process. The arylmopholino-chlorophosphate is prepared by reacting phosphorus oxychloride (POCl₃) with aromatic alcohol and morpholine. Diaryl-chlorophosphate and dimorpholino-chlorophosphate can be added up to 20 % by weight for preparation of the arylmopholino-chlorophosphate.

The oligomeric phosphoric acid ester morpholide compound synthesized in accordance with the method above may contain about 0 to 10 % by weight of a phosphoric acid ester morpholide compound of n=m = 0, about 70 to 100 % by weight of a phosphoric acid ester morpholide compound of n = 1 or m = 1, about 0 to 20 % by weight of a phosphoric acid ester morpholide compound of n+m = 2 or above. The oligomeric phosphoric acid ester morpholide compound may be used without or after purification.

The oligomeric phosphoric acid ester morpholide compound is used in an amount of about 0.5 to 30 parts by weight as per 100 parts by weight of (A)+(B)+(C), preferably about 1 to 20 parts by weight.

### (E) Fluorinated Polyolefin Resin

The examples of the fluorinated polyolefin resin are polytetrafluoroethylene, polyvinylidenefluoride, tetrafluoroethylene/vinylidenefluoride copolymer, tetrafluoroethylene/hexafluoropropylene copolymer, and ethylene/tetrafluoroethylene copolymer. The fluorinated polyolefin resin may be used in single or in combination as a mixture.

The fluorinated polyolefin resin functions to form a fibrillar network when the resin composition containing the fluorinated polyolefin resin is extruded. As this fibrillar network increases the shrinkage of polymer melt during combustion, it prevents the dripping phenomena of polymer melt.

The fluorinated polyolefin resin (E) according to the present invention is prepared by a conventional process, for example, the resin is prepared in an aqueous medium at pressures of 7 ~ 71 kg/cm2 and at temperatures of 0 ∼ 200 °C, preferably 20 ∼ 100 °C, in the presence of a free radical forming catalyst such as sodium-, potassium-, or ammonium-peroxydisulphate.

The fluorinated polyolefin resin can be used in emulsion state or in powder form. In the case of using fluorinated polyolefin in emulsion state, the dispersion of the fluorinated polyolefin resin in resin composition is good, but the process will be somewhat complicated. Accordingly, if the powder form of fluorinated polyolefin resin is uniformly dispersed in the entire resin composition to form the fibrillar network structure during extrusion, it is preferable to use the fluorinated polyolefin resin in powder form.

The fluorinated polyolefin resin has average particle size of about 0.05 to 1000 µm and density of about 1.2 to 2.3 g/cm³.

The fluorinated polyolefin resin is used in amount of about 0.5 to 5.0 parts by weight as per 100 parts by weight of (A)+(B)+(C) of the flame retardant thermoplastic resin composition according to the present invention.

The resin compositions according to the invention may contain customary additives such as additional flame retardants, lubricants, releasing agents, anti-dripping agents, impact modifiers, plasticizers, heat stabilizers, oxidation inhibitors, light stabilizers, compatibilizers together with dyes and pigments. The filled or reinforced resin compositions may contain up to 60 parts, preferably 10 to 40 parts by weight as per 100 parts by weight of (A)+(B)+(C) of the flame retardant thermoplastic resin composition, of fillers and/or reinforcing materials. Glass fiber is the preferred reinforcing material. Preferred fillers are glass beads, talc, silica, mica, quartz, and titanium dioxide.

The flame retardant thermoplastic resin composition according to the present invention can be prepared by a conventional method. All the components and additives are mixed together in a known manner and melt-extruded through an extruder and are prepared in the form of pellets.

The flame retardant thermoplastic resin composition according to the present invention may be used to produce moldings of any kind. In particular, the resin composition is suitable for the production of electric or electronic housings such as computer monitor parts, notebook computer parts, etc, which require good flame retardancy, heat resistance and high flexural modulus.

The invention may be better understood by reference to the following examples that are intended for the purpose of illustration and are not to be construed as in any way limiting the scope of the present invention, which is defined in the claims appended hereto. In the following examples, all parts and percentage are by weight unless otherwise indicated.

### Examples

The components to prepare flame retardant thermoplastic resin compositions in Example 1 and Comparative Examples 1A-1C are as follows:

### (A) Polycarbonate Resin

Bisphenol-A with a weight average molecular weight (M_{w}) of about 25,000 was used as polycarbonate resin.

### (B) Rubber Modified Graft Copolymer (ABS)

45 parts of butadiene rubber latex, 36 parts of styrene, 14 parts of acrylonitrile and 150 parts of deionized water, as per 100 parts by weight of butadiene rubber latex + styrene + acrylonitrile, were mixed in a reaction vessel. To the mixture, 1.0 parts of potassium oleate, 0.4 parts of cumenhydroperoxide, and 0.3 parts of mercaptan-containing chain transfer agent, as per 100 parts by weight of butadiene rubber latex + styrene + acrylonitrile, were added. The mixture was kept at 75°C for 5 hours to obtain ABS latex by grafting reaction. To the ABS latex, 1 % sulfuric acid was added, coagulated and dried to obtain rubber modified graft copolymer resin (ABS) in powder form.

### (C) Styrene-Containing Copolymer (SAN)

70 parts of styrene, 30 parts of acrylonitrile, 120 parts of deionized water and 0.2 parts of azobisisobutylonitrile, as per 100 parts by weight of styrene + acrylonitrile, were mixed in a reaction vessel. To the mixture, 0.5 parts of tricalciumphosphate and 0.3 parts of mercaptan-containing chain transfer agent, as per 100 parts by weight of styrene + acrylonitrile, were added. The resultant mixture was heated to 80°C for 90 minutes and kept for 180 minutes to polymerize the vinyl monomers. Finally, styrene-acrylonitrile copolymer (SAN) was obtained in powder form after washing and drying.

### (D) Oligomeric Phosphoric Acid Ester Morpholide Compound as Flame Retardant

(D₁) The oligomeric phosphoric acid ester morpholide compound was prepared by reacting resorcinol with arylmorpholino-chlorophosphate, which is represented by the chemical formula (I), where R₁ is a phenyl group, R₂ is a resorcinol derivative and x = 1, which consists of 3 % by weight of the compound of n = m = 0, 78 % by weight of the compound of n = 1 or m = 1, and 19 % by weight of the compound of n + m = 2 or above.
(D₂) Triphenylphosphate was used as flame retardant in Comparative Example 1A.
(D₃) Resorcinol bis(diphenylphosphate) (Product No. CR-733S) of Daihachi Chemical Co. of Japan was used as flame retardant in Comparative Example 1B.
(D₄) Bisphenol-A bis(diphenylphosphate) (Product No. CR-741 S) of Daihachi Chemical Co. of Japan was used as flame retardant in Comparative Example 1C.

### (E) Fluorinated Polyolefin Resin

Teflon (registered trademark) 7AJ by Dupont company was used.

### Example 1

The components as shown in Table 1, together with antioxidants and heat stabilizers were mixed in a conventional mixer and the mixture was melt-extruded through a twin screw extruder with L/D=35 and ⌀=45mm at 240 °C to prepare the resin composition in pellet form. The resin pellets were molded into test specimens for measuring flame retardancy and mechanical strengths using a 10 oz injection molding machine at 250°C.

The heat stability was measured in accordance with Thermal Gravimetric Analysis using the pellets. The resin pellets of Example 1 were heated to 250°C at the heating rate of 20 °C/min in the nitrogen atmosphere and were kept for 30 minutes. The heat stability of the resin composition was evaluated by measuring the loss of mass of the specimens for 30 minutes at 250°C.

The specimens of 200 mm X 50 mm X 2 mm were prepared using a 10 oz injection molding machine at 250°C for evaluating the juicing phenomena of the resin composition. The temperature of the mold was at 50 °C. The resistance of the resin composition for Juicing phenomenon was evaluated by observing the number of shot at which juicing phenomenon occurred first on the surface of the molded specimen.

### Comparative Examples 1A-1C

The Comparative Examples 1A-1C were conducted in the same manner as in Example 1 except that (D₂), (D₃) and (D₄) were used as a flame retardant. The components of the Comparative Examples and the test results are also shown in Table 1.

**Table 1**

| | Example | Comparative Examples | | |
|---|---|---|---|---|
| | 1 | 1A | 1B | 1C |
| (A) Polycarbonate Resin | 75 | 75 | 75 | 75 |
| (B) Rubber Modified Graft Copolymer (ABS) | 12 | 12 | 12 | 12 |
| (C) Styrene-Containing Copolymer (SAN) | 13 | 13 | 13 | 13 |
| (D₁) Oligomeric phosphoric acid ester morpholide compound | 12 | - | - | - |
| (D₂) Triphenylphosphate | - | 12 | - | - |
| (D₃) Resorcinol bis(diphenyl phosphate) | - | - | 12 | - |
| (D₄) Bisphenol-A bis(diphenyl phosphate) - | | - | - | 12 |
| (E) Fluorinated Polyolefin Resin | 0.4 | 0.4 | 0.4 | 0.4 |
| Flame Retardancy (1/16 inch) | V-0 | V-0 | V-0 | V-2 |
| Drippings/Tests | 0/5 | 0/5 | 0/5 | 2/5 |
| VST (°C) | 97 | 89 | 91 | 95 |
| Flexural Modulus (kgf/cm²) | 25,000 | 23,100 | 23,500 | 23,500 |
| Loss of Mass for 30 min. at 250 °C | 1.6% | 10.1% | 1.4% | 1.2% |
| Number of Shot at which Juicing | | | | |
| Phenomenon Occurred First | 45th | 12th | 42nd | 45th |
| Note: The flame retardancy was measured in accordance with UL94VB, the VST was measured in accordance with ASTM D1525, and the flexural modulus was measured in accordance with ASTM D790. | | | | |

As shown in Table 1, when the monophosphorus acid ester, triphenylphosphate, is used as a flame retardant, the flame retardancy is excellent, but heat resistance and heat stability are deteriorated, and juicing occurs severely (Comparative Example 1A). When the oligomeric phosphorus acid ester, resorcinol bis(diphenylphosphate), is used as a flame retardant, heat stability and the resistance for juicing are improved, but mechanical properties such as heat resistance and flexural modulus become poor (Comparative Example 1B). When another oligomeric phosphorus acid ester, bisphenol-A bis(diphenylphosphate), is used as a flame retardant, heat resistance, heat stability and the resistance for juicing are improved, but flame reardancy becomes poor (Comparative Example 1C).

On the other hand, when the oligomeric phosphorus acid ester morpholide compound of Example 1 is used as a flame retardant, heat stability, flame retardancy and the resistance for juicing are improved, and mechanical properties such as heat resistance and flexural modulus are excellent.

## Claims

1. A flame retardant thermoplastic resin composition comprising:
(A) 45 to 95 parts by weight of a polycarbonate resin;
(B) 1 to 50 parts by weight of a rubber modified graft copolymer prepared by graft-polymerizing (b₁) 5 to 95 parts by weight of a monomer mixture consisting of (b₁₁) 50 to 95 % by weight of styrene, α-methylstyrene, halogen- or methyl ring-substituted styrene, C₁₋₈ methacrylic acid alkyl ester, C₁₋₈ acrylic acid alkyl ester, or a mixture thereof and (b₁₂) 5 to 50 % by weight of acrylonitrile, methacrylonitrile, C₁₋₈ methacrylic acid alkyl ester, C₁₋₈ acrylic acid alkyl ester, maleic acid anhydride, C₁₋₄ alkyl- or phenyl N-substituted maleimide or a mixture thereof onto (b₂) 5 to 95 parts by weight of a rubber polymer with a glass transition temperature of below -10°C selected from the group consisting of butadiene rubber, acrylate rubber, ethylene-propylene rubber, styrene-butadiene rubber, acrylonitrile-butadiene rubber, isoprene rubber, copolymer of ethylene-propylene-diene (EPDM), polyorganosiloxane-polyalkyl(metha)acrylate rubber or a mixture thereof;
(C) 0.5 to 50 parts by weight of a styrene-containing copolymer polymerized with (c₁) 50 to 95 % by weight of styrene, α-methylstyrene, ring-substituted styrene or a mixture thereof and (c₂) 5 to 50 % by weight of acrylonitrile, methacrylonitrile, C₁₋₈ methacrylic acid alkyl ester, C₁₋₈ acrylic acid alkyl ester, maleic acid anhydride, C₁₋₄ alkyl- or phenyl N-substituted maleimide or a mixture thereof;
(D) 0.5 to 30 parts by weight of an oligomeric phosphoric acid ester morpholide compound which is represented by the following chemical formula (I), or a mixture thereof as a flame retardant as per 100 parts by weight of (A)+(B)+(C); and
(E) 0.05 to 5.0 parts by weight of a fluorinated polyolefin resin with average particle size of about 0.05 to 1000 µm and density of 1.2 to 2.3 g/cm³ as per 100 parts by weight of (A)+(B)+(C): 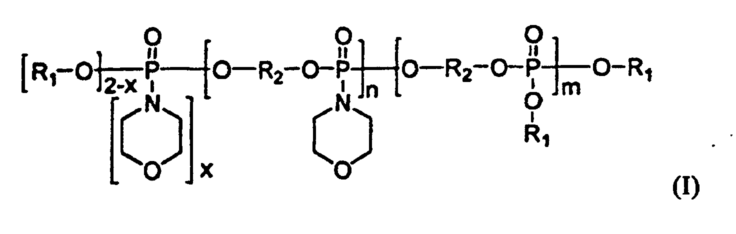
where R₁ is a C₆₋₂₀ aryl group or an alkyl-substituted C₆₋₂₀ aryl group, R₂ is a C₆₋₃₀ aryl group or an alkyl-substituted C₆₋₃₀ aryl group, x is 1 or 2, and n and m are number average degree of polymerization and n+m is 0.3 to 3.

2. The flame retardant thermoplastic resin composition as defined in claim 1, wherein R₁ is a phenyl group or an alkyl-substituted phenyl group in which alkyl is methyl, ethyl, isopropyl or t-butyl.

3. The flame retardant thermoplastic resin composition as defined in claim 1, wherein R₂ is a residue derived from resorcinol, hydroquinone or bisphenol-A.

4. The flame retardant thermoplastic resin composition as defined in claim 1, further comprising additional flame retardants, lubricants, releasing agents, anti-dripping agents, impact modifiers, plasticizers, heat stabilizers, oxidation inhibitors, light stabilizers and/or compatibilizers.

5. A molded article produced from the flame retardant thermoplastic resin composition as defined in any one of claims 1-4.

## Patentansprüche

1. Flammenhemmende thermoplastische Harzzusammensetzung umfassend:
(A) 45 bis 95 Gewichtsteile eines Polycarbonatharzes,
(B) 1 bis 50 Gewichtsteile Kautschuk-modifiziertes Pfropfcopolymer hergestellt durch Pfropfpolymerisation von (b₁) 5 bis 95 Gewichtsteile einer monomeren Mischung bestehend aus (b₁₁) 50 bis 95 Gewichts-% Styrol, α-Methylstyrol, Halogen- oder Methyl-ringsubstituiertes Styrol, C₁₋₈ Methacrylsäurealkylester, C₁₋₈ Acrylsäurealkylester oder einer Mischung daraus und (b₁₂) 5 bis 50 Gewichts-% Acrylonitril, Methacrylonitril, C₁₋₈ Methacrylsäurealkylester, C₁₋₈ Acrylsäurealkylester, Maleinsäureanhydrid, C₁₋₄Alkyl- oder Phenyl-N-substituiertes Maleimid oder einer Mischung daraus, auf (b₂) 5 bis 95 Gewichtsteile Kautschukpolymer mit einer Glasübergangstemperatur von unter -10°C, ausgewählt aus der Gruppe, bestehend aus Butadienkautschuk, Acrylatkautschuk, Ethylen-Propylen-Kautschuk, Styrol-Butadien-Kautschuk, Acrylonitril-Butadien-Kautschuk, Isopren-Kautschuk, Copolymer aus Ethylen-Propylen-Dien (EPDM), Polyorganosiloxan-polyalkyl(metha)acrylat-Kautschuk oder einer Mischung daraus,
(C) 0,5 bis 50 Gewichtsteile eines Styrol-haltigen Copolymers polymerisiert mit (c₁) 50 bis 95 Gewichts-% Styrol, α-Methylstyrol, ringsubstituiertes Styrol oder einer Mischung daraus und (c₂) 5 bis 50 Gewichts-% Acrylonitril, Methacrylonitril, C₁₋₈ Methacrylsäurealkylester, C₁₋₈ Acrylsäurealkylester, Maleinsäureanhydrid, C₁₋₄ Alkyl- oder Phenyl-N-substituiertes Maleimid oder einer Mischung daraus,
(D) 0,5 bis 30 Gewichtsteile einer oligomeren Phosphorsäureestermorpholidverbindung, die durch die folgende chemische Formel (I) dargestellt ist oder einer Mischung daraus als ein Flammenhemmstoff gemäß 100 Gewichtsteilen (A)+(B)+(C); und
(E) 0,05 bis 5,0 Gewichtsteile fluoriertes Polyolefinharz mit einer durchschnittlichen Teilchengröße von 0,05 bis 1000 µm und einer Dichte von 1,2 bis 2,3 g/cm³ gemäß 100 Gewichtsteilen (A)+(B)+(C): 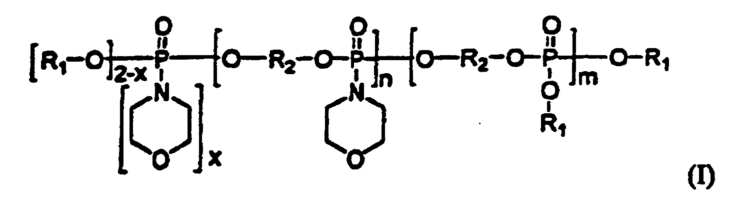
wobei R₁ eine C₆₋₂₀ Arylgruppe oder eine Alky-substituierte C₆₋₂₀ Arylgruppe, R₂ eine C₆₋₃₀ Arylgruppe oder eine Alkyl-substituierte C₆₋₃₀ Arylgruppe ist, x ist 1 oder 2 und n und m die Zahl des durchschnittlichen Polymerisationsgrades sind und n+m von 0,3 bis 3 reicht.

2. Flammenhemmende thermoplastische Harzzusammensetzung wie in Anspruch 1 definiert, bei der R₁ eine Phenylgruppe oder eine Alkyl-substituierte Phenylgruppe ist, in der Alkyl bedeutet Methyl, Ethyl, Isopropyl oder t-Butyl bedeutet.

3. Flammenhemmende thermoplastische Harzzusammensetzung wie in Anspruch 1 definiert, bei der R₂ ein Rest ist, der sich von Resorcinol, Hydrochinon oder Bisphenol A ableitet.

4. Flammenhemmende thermoplastische Harzzusammensetzung wie in Anspruch 1 definiert, die außerdem zusätzliche Flammhemmstoffe, Schmiermittel, Trennmittel, Antitropfmittel, Schlagmodifikationsmittel, Weichmacher, Hitzestabilisatoren, Oxidationsinhibitoren, Lichtstabilisatoren und/oder Kompatibilitätsmittel umfaßt.

5. Formteil hergestellt aus der flammenhemmenden thermoplastischen Harzzusammensetzung wie sie in einem der Ansprüche 1 bis 4 definiert ist.

## Revendications

1. Composition de résine thermoplastique ignifugeante comprenant :
(A) 45 à 95 parties en poids d'une résine de polycarbonate,
(B) 1 à 50 parties en poids d'un copolymère greffé modifié au caoutchouc préparé par une polymérisation greffée de (b1) 5 à 95 parties en poids d'un mélange monomère constitué de (b11) 50 à 95 % en poids de styrène, de α-méthylstyrène, de styrène à anneau substitué halogène ou méthyle, ester alkyle acide méthacrylique C1-8, ester alkyle acide acrylique C1-8 ou un mélange de ceux-ci, et (b12) 5 à 50 % en poids d'acrylonitrile, de méthacrylonitrile, ester alkyle acide méthacrylique C1-8, ester alkyle acide acrylique C1-8, anhydride d'acide malique, malimide N-substitué phényle ou alkyle C1-4 ou un mélange de ceux-ci sur (b2) 5 à 95 parties en poids d'un polymère au caoutchouc avec une température de transition vitreuse inférieure à -10 °C sélectionné dans le groupe constitué de caoutchouc butadiène, caoutchouc acrylate, caoutchouc éthylène-propylène, caoutchouc styrène-butadiène, caoutchouc acrylonitrile-butadiène, caoutchouc isoprène, copolymère d'éthylène-propylène-diène (EPDM), caoutchouc polyorganosiloxane-polyalkyl(métha)acrylate ou un mélange de ceux-ci,
(C) 0,5 à 50 parties en poids d'une copolymère contenant du styrène polymérisé avec (c1) 50 à 95 % en poids de styrène, α-méthylstyrène, styrène à anneau substitué ou un mélange de ceux-ci et (c2) 5 à 50 % en poids d'acrylonitrite, de méthacrylonitrile, ester alkyle acide méthacrylique C1-8, ester alkyle d'acide acrylique C1-8, anhydride d'acide malique, malimide N-substitué phényle ou alkyle C1-4 ou un mélange de ceux-ci,
(D) 0,5 à 30 parties en poids d'un composé de morpholide d'ester d'acide phosphorique oligomérique qui est représenté par la formule chimique suivante (1), ou un mélange de ceux-ci en tant qu'agent ignifugeant à raison de 100 parties en poids de (A)+(B)+(C), et
(E) 0,05 à 5,0 parties en poids d'une résine de polyoléfine fluoré avec une taille de particules moyenne de 0,05 à 1 000 µm et une densité de 1,2 à 2,3 g/cm3 à raison de 100 parties en poids de (A)+(B)+(C) 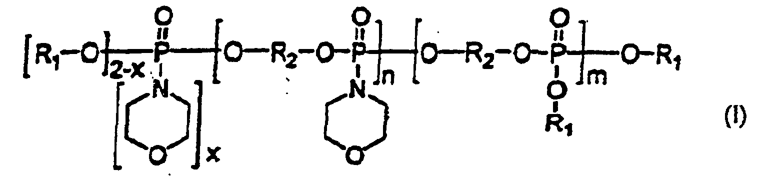
où R1 est un groupe aryle C6-20 ou un groupe aryle C6-20 à alkyle substitué, R2 est un groupe aryle C6-30 ou un groupe aryle C6-30 à alkyle substitué, x est 1 ou 2, et n et m sont une moyenne en nombre du degré de polymérisation et n+m est 0,3 à 3.

2. Composition de résine thermoplastique ignifugeante telle que définie dans la revendication 1, où R1 est un groupe phényle ou un groupe phényle à alkyle substitué dans lequel l'alkyle est méthyle, éthyle, isopropyle ou t-butyle.

3. Composition de résine thermoplastique ignifugeante telle que définie dans la revendication 1, où R2 est un résidu dérivé de résorcinol, hydroquinone ou bisphénol-A.

4. Composition de résine thermoplastique ignifugeante telle que définie dans la revendication 1, comprenant également des ignifuges supplémentaires, des lubrifiants, des agents libérateurs, des agents anti-égouttement, des modificateurs de chocs, des plastifiants, des stabilisateurs thermiques, des inhibiteurs d'oxydation, des stabilisateurs de lumière et/ou des compatibiliseurs.

5. Article moulé produit à partir de la composition de résine thermoplastique ignifugeante telle que définie dans l'une quelconque des revendications 1-4.
